# EUROPEAN PATENT APPLICATION

(11) **EP 4 116 139 A1**
(43) Date of publication of application: **11.01.2023**
(21) Application number: 21214903.3
(22) Date of filing: 15.12.2021
(51) Int. Cl.: B60L 53/14, B60L 53/16, B60L 53/30, B60L 53/35, B60L 53/66, B60L 53/60, B60L 53/10, B60L 53/20, B60K 15/05

(54) **CHARGING CONTROL METHOD, VEHICLE, EV CHARGING PLUG, CHARGING DEVICE, AND STORAGE MEDIUM**

(30) Priority: 08.07.2021 CN 202110772473
(71) Applicant: Guangzhou Xiaopeng Motors Technology Co., Ltd., Tianhe District Guangzhou Guangdong (CN)
(72) Inventor: He, Zenglong, Guangzhou (CN)
(74) Representative: Habermann, Hruschka & Schnabel

(57) **Abstract**

Embodiments of the present disclosure disclose a charging control method, a vehicle, an EV charging plug, a charging device, and a storage medium, which belong to the technical field of vehicles, and can solve the problem of poor convenience of charging operations for opening a charging port in the related art. The method is applied in a vehicle that includes at least one UWB antenna module and two charging ports of different types, and the method includes: obtaining, based on the at least one UWB antenna module, type information of an EV charging plug for charging the vehicle, where the type information is used for indicating a type of the EV charging plug; determining, based on the type of the EV charging plug, a first charging port that matches the type of the EV charging plug from the two charging ports; and opening a cover of the first charging port.

## Description

### TECHNICAL FIELD

The present disclosure relates to the field of vehicle technologies, and more particularly, to a charging control method, a vehicle, an EV charging plug, a charging device, and a storage medium.

### BACKGROUND

With the widespread popularity of new energy vehicles, the convenience of charging operations has become the focus of users of the new energy vehicle.

At present, the new energy vehicles basically have two charging ports: a direct current fast charging port and an alternate current slow charging port, and it is necessary for almost all new energy vehicles to open a cover of a charging port that matches the type of the EV charging plug, and then plug the EV charging plug into the charging port for charging. In this way, when the user is not familiar with the types of the two charging ports, it is very likely to open the charging port that does not match the type of the EV charging plug, causing a lot of unnecessary operations.

Therefore, the convenience of the existing charging operations for opening the charging port is poor.

### SUMMARY

Embodiments of the present disclosure provide a charging control method, a vehicle, an EV charging plug, a charging device, and a storage medium, so as to solve the problem of poor convenience of charging operations for opening a charging port.

A first aspect of embodiments of the present disclosure provides a charging control method applied in a vehicle including at least one ultra wideband (Ultra Wideband, UWB) antenna module and two charging ports of different types. The method includes: obtaining, based on the at least one UWB antenna module, type information of an EV charging plug for charging the vehicle, the type information being used for indicating a type of the EV charging plug; determining, based on the type of the EV charging plug, a first charging port matching the type of the EV charging plug from the two charging ports; and opening a cover of the first charging port.

A second aspect of the embodiments of the present disclosure provides a charging control method applied in an EV charging plug provided with a target UWB antenna module. The method includes: transmitting type information of the EV charging plug to a vehicle based on the target UWB antenna module, where the vehicle includes two charging ports of different types, and the type information is used for indicating a type of the EV charging plug; and the type information is used for the vehicle to determine the EV charging plug for charging the vehicle, determine a first charging port that matches the type of the EV charging plug from the two charging ports based on the type of the EV charging plug, and open a cover of the first charging port.

A third aspect of the embodiments of the present disclosure provides a charging control method applied in a charging device including at least three second UWB antenna modules that are not on a same straight line and an EV charging plug. The charging device is a charging station or a charging pile. The method includes: positioning the EV charging plug based on the at least three second UWB antenna modules to obtain a third distance and a third orientation of the EV charging plug relative to the charging device; and transmitting the third distance and the third orientation to the vehicle. The at least three second UWB modules are further used for the vehicle to position the charging device to obtain a second distance and a second orientation of the vehicle relative to the charging device; a first distance and a first orientation of the EV charging plug relative to the vehicle are obtained based on the second distance, the second orientation, the third distance and the third orientation; and the first distance and the first orientation are used for the vehicle to determine a distance between the EV charging plug and a first charging port that matches a type of the EV charging plug based on the first distance, the first orientation and a position of the first charging port on the vehicle, and open a cover of the first charging port when the distance between the EV charging plug and the first charging port is smaller than or equal to a first threshold.

A fourth aspect of the embodiments of the present disclosure provides a vehicle including at least one UWB antenna module and two charging ports of different types. The vehicle further includes: an obtaining module, a determining module, and an opening module. The obtaining module is configured to obtain, based on the at least one UWB antenna module, type information of an EV charging plug for charging the vehicle, where the type information is used for indicating a type of the EV charging plug; the determining module is configured to determine, based on the type of the EV charging plug obtained by the obtaining module, a first charging port matching the type of the EV charging plug from the two charging ports; and the opening module is configured to open a cover of the first charging port determined by the determining module.

A fifth aspect of the embodiments of the present disclosure provides an EV charging plug provided with a target UWB antenna module. The EV charging plug includes a transmitting module. The transmitting module is configured to transmit type information of the EV charging plug to a vehicle based on the target UWB antenna module. The vehicle includes two charging ports of different types, the type information is used for indicating a type of the EV charging plug, and the type information is used for the vehicle to determine the EV charging plug for charging the vehicle, determine, based on the type of the EV charging plug, a first charging port that matches the type of the EV charging plug from the two charging ports, and open a cover of the first charging port.

A sixth aspect of the embodiments of the present disclosure provides a charging device. The charging device is a charging pile or a charging station and includes at least three second UWB antenna modules that are not on a same straight line and an EV charging plug. The charging device further includes a positioning module and a transmitting module. The positioning module is configured to position the EV charging plug based on the at least three second UWB antenna modules to obtain a third distance and a third orientation of the EV charging plug relative to the charging device; and the transmitting module is configured to transmit the third distance and the third orientation obtained by the positioning module to the vehicle. The at least three second UWB modules are further used for the vehicle to position the charging device to obtain a second distance and a second orientation of the vehicle relative to the charging device; a first distance and a first orientation of the EV charging plug relative to the vehicle are obtained based on the second distance, the second orientation, the third distance and the third orientation; the first distance and the first orientation are used for the vehicle to determine a distance between the EV charging plug and a first charging port that matches a type of the EV charging plug based on the first distance, the first orientation and a position of the first charging port on the vehicle, and open a cover of the first charging port when the distance between the EV charging plug and the first charging port is smaller than or equal to a first threshold.

A seventh aspect of the embodiments of the present disclosure provides a vehicle including a processor, a memory, and a program or instruction stored on the memory and executable on the processor. The program or instruction, when executed by the processor, implements steps of the charging control method as described in the first aspect.

An eighth aspect of the embodiments of the present disclosure provides an EV charging plug including a processor, a memory, and a program or instruction stored on the memory and executable on the processor. The program or instruction, when executed by the processor, implements steps of the charging control method as described in the second aspect.

A ninth aspect of the embodiments of the present disclosure provides a charging device. The charging device is a charging pile or a charging station and including a processor, a memory, and a program or instruction stored on the memory and executable on the processor. The program or instruction, when executed by the processor, implements steps of the charging control method as described in the third aspect.

A tenth aspect of the embodiments of the present disclosure provides a readable storage medium having a program or instruction stored thereon. The program or instruction, when executed by a processor, implements steps of the charging control method as described in the first, second, or third aspect.

An eleventh aspect of the embodiments of the present disclosure provides a chip. The chip includes a processor and a communication interface, the communication interface is coupled to the processor, and the processor is configured to execute a program or instruction to implement the charging control method as described in the first, second, or third aspect.

In the embodiments of the present disclosure, the vehicle can obtain, based on at least one UWB antenna module in the vehicle, the type information of the EV charging plug for charging the vehicle based on at least one UWB antenna module in the vehicle, the type information being used for indicating the type of the EV charging plug; determine, based on the type of the EV charging plug, a first charging port matching the type of the EV charging plug from two charging ports of different types of the vehicle; and open the cover of the first charging port. In this solution, on one hand, the vehicle obtains, based on at least one UWB antenna module, the type of EV charging plug for charging the vehicle. Since the UWB antenna module has high positioning accuracy, a fast response speed, and a long positioning distance, at least one UWB module can be used timely and efficiently to match an EV charging plug for the vehicle and obtain the type of the EV charging plug when the vehicle needs to be charged; on the other hand, based on the type of the EV charging plug, the first charging port matching the type of the EV charging plug is determined from the two charging ports, and then the charging port is opened, so that the first charging port is opened with no need for the user to memorize the type of charging port, which reduces the user's memory burden. Moreover, there is no need for the user to manually open the cover of the charging port, which can prevent the user from opening the cover of the wrong charging port during manual operation. In this way, the user's comfort experience is improved, and the technology of the vehicle is improved.

### BRIEF DESCRIPTION OF DRAWINGS

In order to more clearly explain technical solutions of the embodiments of the present disclosure or in the related art, drawings used in the description of the embodiments or the related art are briefly described below. Obviously, the drawings as described below are merely some embodiments of the present disclosure, and other drawings can be obtained based on these drawings.
FIG. 1 is a first structural schematic diagram of a vehicle charging system provided by an embodiment of the present disclosure;
FIG. 2 is a first schematic flowchart of a charging control method provided by an embodiment of the present disclosure;
FIG. 3 is a second schematic flowchart of a charging control method provided by an embodiment of the present disclosure;
FIG. 4 is a second structural schematic diagram of a vehicle charging system provided by an embodiment of the present disclosure;
FIG. 5 is a third schematic flowchart of a charging control method provided by an embodiment of the present disclosure;
FIG. 6 is a structural block diagram of a vehicle provided by an embodiment of the present disclosure;
FIG. 7 is a structural block diagram of an EV charging plug provided by an embodiment of the present disclosure; and
FIG. 8 is a structural block diagram of a charging device provided by an embodiment of the present disclosure.

### DESCRIPTION OF EMBODIMENTS

The technical solutions in the embodiments of the present disclosure will be clearly described below in conjunction with the drawings in the embodiments of the present disclosure. Obviously, the described embodiments are part of the embodiments of the present disclosure, not all of the embodiments. Based on the embodiments in the present disclosure, all other embodiments obtained by those skilled in the art fall within the protection scope of the present disclosure.

The terms "first", "second" and the like in the specification and claims of the present disclosure are used to distinguish similar objects, but not to describe a specific sequence or order. It should be understood that the data used in this way can be interchanged under appropriate circumstances, so that the embodiments of the present disclosure can be implemented in an order other than those illustrated or described here, and the objects distinguished by the "first", "second", and the like are usually of one type, and the number of objects is not limited. For example, the first object may be one or more. In addition, "and/or" in the specification and claims means at least one of the connected objects, and the character "/" generally means that the associated objects before and after the character are in an "or" relationship.

Charging control methods provided by the embodiments of the present disclosure are applied in a scenario where a cover of a charging port is automatically opened when a vehicle is charged. At present, a vehicle usually has two charging ports of different types. When a user is not familiar with the types of the respective charging ports of the vehicle, the user usually opens the cover of a wrong charging port, and before the vehicle opens the charging port that matches the type of the EV charging plug, it was necessary to determine the EV charging plug for charging the vehicle and the type of the EV charging plug through communication with the EV charging plug. Therefore, in order to improve the technology, user experience and the like of the charging process, a relatively fast and efficient communication method is urgently needed.

In order to solve the above technical problem, an embodiment of the present disclosure provides a charging control method. A vehicle can obtain, based on at least one UWB antenna module, type information of an EV charging plug for charging the vehicle in the vehicle, the type information being used for indicating a type of the EV charging plug; determine, based on the type of the EV charging plug, a first charging port matching the type of the EV charging plug from the two charging ports; and open a cover of the first charging port. In this solution, on one hand, the vehicle obtains the type of EV charging plug for charging the vehicle based on at least one UWB antenna module. Since the UWB antenna module has high positioning accuracy, fast response speed, and long positioning distance, at least one UWB module can be used timely and efficiently to match an EV charging plug for the vehicle and obtain the type of the EV charging plug when the vehicle needs to be charged. On the other hand, based on the type of the EV charging plug, the first charging port matching the type of the EV charging plug is determined from the two charging ports, and then the charging port is opened, so that the first charging port is opened with no need for the user to memorize the type of charging port, which reduces the user's memory burden. Moreover, there is no need for the user to manually open the cover of the charging port, which can prevent the user from opening the cover of the wrong charging port during manual operation. In this way, the user's comfort experience is improved, and the technology of the vehicle is improved.

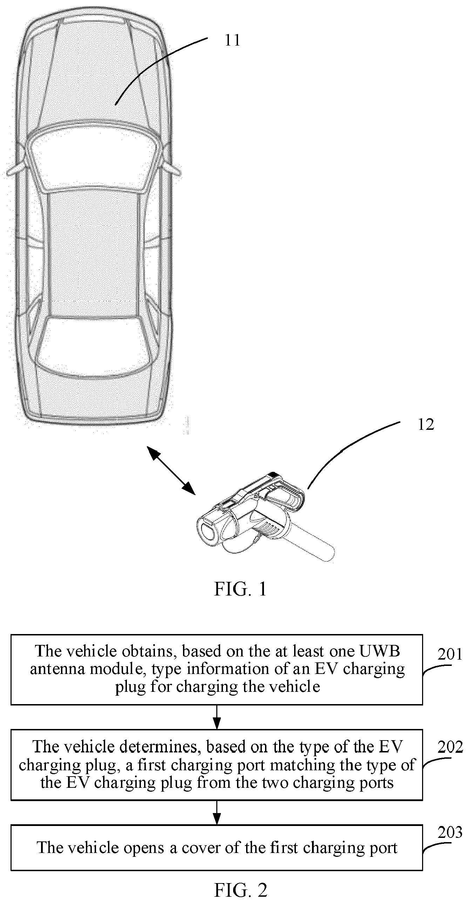

FIG. 1 is a vehicle charging system illustrated in an embodiment of the present disclosure. As shown in FIG. 1, the vehicle charging system includes a vehicle 11 and an EV charging plug 12. The EV charging plug 12 is configured to charge the vehicle 11. The vehicle 11 may be an electric vehicle. The vehicle 11 may include two charging ports, a direct current fast charging port (abbreviated as a fast charging port) and an alternate current slow charging port (abbreviated as a slow charging port) (charging ports of other types may be also included, which is not limited in the embodiment of the present disclosure), and at least one UWB antenna module. The fast charging port and the slow charging port of the vehicle 11 may be integrated (that is, installed at a same position of the vehicle 11), or installed separately in different positions of the vehicle 11 (for example, respectively installed on left and right sides of the vehicle 11), which may be specifically determined according to actual conditions, and which is not limited in the embodiment of the present disclosure. The EV charging plug 12 may be a fast EV charging plug corresponding to the fast charging port of the vehicle 11, or a slow EV charging plug corresponding to the slow charging port of the vehicle 11. The vehicle 11 communicates with the EV charging plug 12 through at least one UWB antenna module.

An execution subject of the charging control method applied in the vehicle provided by the embodiment of the present disclosure may be the vehicle, a vehicle-mounted terminal, or a functional module and/or functional entity in the vehicle that can implement the charging control method, which can be specifically determined according to actual needs, and which is not limited in the embodiment of the present disclosure.

The charging control method provided in the embodiment of the present disclosure is described in detail below through specific embodiments and application scenarios thereof in conjunction with the accompanying drawings.

As shown in FIG. 2, an embodiment of the present disclosure provides a charging control method. Hereinafter, the charging control method provided in the embodiment of the present disclosure will be exemplarily described below by taking the vehicle as the execution subject as an example. The method may include the following steps 201 to 203.

At step 201, the vehicle obtains, based on at least one UWB antenna module, type information of an EV charging plug for charging the vehicle.

The type information is used for indicating a type of the EV charging plug.

The vehicle includes at least one UWB antenna module and two charging ports of different types.

It can be understood that, in the embodiment of the present disclosure, the UWB antenna module may be referred to as a UWB antenna. The UWB technology is a carrier-free communication technology that uses nonsinusoidal wave narrow pulses from a nanosecond level to a picosecond level to transmit data.

It can be understood that the vehicle includes one UWB antenna module or a plurality of UWB antenna modules, which is not limited in the embodiment of the present disclosure.

It can be understood that the vehicle may further include other charging ports in addition to the two charging ports, which is not limited in the embodiment of the present disclosure.

Accordingly, the EV charging plug transmits the type information of the EV charging plug to the vehicle based on the target UWB antenna module. The type information is used for the vehicle to determine an EV charging plug for charging the vehicle, determine a first charging port that matches the type of the EV charging plug from the two charging ports based on the type of the EV charging plug, and open a cover of the first charging port.

It can be understood that the EV charging plug includes the target UWB antenna module, and the vehicle communicates with the target UWB antenna module through one UWB antenna module of at least one UWB antenna module to obtain the type information of the EV charging plug for charging the vehicle. Optionally, the vehicle may obtain type information of a plurality of available EV charging plugs, and then determine an EV charging plug that finally charges the vehicle based on the type information of the plurality of available EV charging plugs.

Optionally, the vehicle can also communicate with the target UWB antenna module through one UWB antenna module of at least one UWB antenna module to obtain more information about the EV charging plug. For example, the information includes at least one of identity information of the EV charging plug, charging parameter information of the EV charging plug, fault information of the EV charging plug, etc.

The type information of the EV charging plug is used for indicating that the EV charging plug is a fast EV charging plug or a slow EV charging plug. The identity information of the EV charging plug is used for indicating a device number of the EV charging plug. The charging parameter information of the EV charging plug is used for indicating at least one of a power of the charging pile (for example, maximum output power, average power, etc.), a voltage of the charging pile, or a current of the charging pile. The fault information of the EV charging plug is used for indicating that the EV charging plug is in a fault state or not.

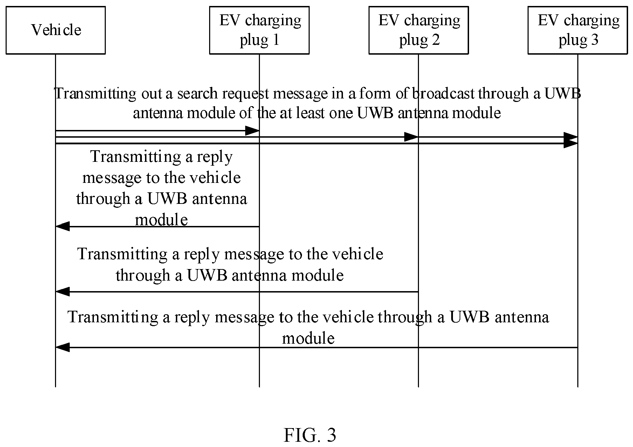

Exemplarily, as shown in FIG. 3, the vehicle transmits out a search request message in a form of broadcast through a UWB antenna module 1 of at least one UWB antenna module. The search request message is used for requesting available EV charging plugs nearby, available EV charging plugs in charging piles or charging stations nearby (in FIG. 3, taking an EV charging plug 1, an EV charging plug 2 and an EV charging plug 3 as examples) to transmit a reply message to the vehicle through the target UWB antenna module after receiving the search request message. A target message includes type information of the EV charging plugs. The vehicle receives a reply message transmitted by each available EV charging plug through the UWB antenna module 1, determines an EV charging plug for charging the vehicle based on the reply message (for example, determines the EV charging plug 1 as the EV charging plug for charging the vehicle), and obtains type information of the EV charging plug.

In the embodiment of the present disclosure, a maximum communication distance between the vehicle and the EV charging plug through the UWB antenna module is about 200 meters. Therefore, through communication with the UWB antenna module, when the vehicle needs to be charged, the vehicle can search for available EV charging plugs through the UWB antenna module and determine an EV charging plug for charging the vehicle before reaching the charging pile or charging station, and then the vehicle can be charged through the EV charging plug immediately after the vehicle arrives at the charging pile or charging station. In this way, the situation that the vehicle cannot quickly reach a charging pile or charging station with an available EV charging plug (for example, the vehicle cannot find a charging pile or charging station nearby, or the vehicle finds no available EV charging plug after finding a charging pile or charging station, etc.) when the vehicle needs to be charged can be avoided.

At step 202, the vehicle determines, based on the type of the EV charging plug, a first charging port matching the type of the EV charging plug from the two charging ports.

It can be understood that if the EV charging plug is a fast EV charging plug, the first charging port is a fast charging port; and if the EV charging plug is a slow EV charging plug, the first charging port is a slow charging port.

At step 203, the vehicle opens a cover of the first charging port.

If there is only one outer cover for each charging port, the opening of the cover of the first charging port of the vehicle means the opening of the outer cover of the first charging port. If each charging port includes an outer cover and an inner cover, the opening of the cover of the first charging port of the vehicle includes the opening of both the outer cover and the inner cover of the first charging port.

In the embodiment of the present disclosure, on one hand, the vehicle determines the EV charging plug and obtains the type of the EV charging plug based on at least one UWB antenna module. Since the UWB antenna module has high positioning accuracy, a fast response speed, and a long positioning distance, at least one UWB module can be used timely and efficiently to match an EV charging plug for the vehicle and obtain the type of the EV charging plug when the vehicle needs to be charged. On the other hand, based on the type of the EV charging plug, the first charging port matching the type of the EV charging plug is determined from the two charging ports and then the charging port is opened, so that the first charging port is opened with no need for the user to memorize the type of charging port, which reduces the user's memory burden. Moreover, there is no need for the user to manually open the cover of the charging port, which can prevent the user from opening the cover of the wrong charging port during manual operation. In this way, the user's comfort experience is improved, and the technology of the vehicle is improved.

Optionally, the vehicle may determine to open the first charging port when the distance between the EV charging plug and the first charging port is within a preset distance.

Exemplarily, the foregoing step 203 may be specifically implemented by the following step 203a.

At step 203a, the vehicle opens the cover of the first charging port when the distance between the EV charging plug and the first charging port is smaller than or equal to a first threshold.

The first threshold can be set according to actual use requirements, which is not limited in the embodiment of the present disclosure.

Optionally, since the UWB antenna module can achieve a positioning accuracy having an error within 10 cm, the first threshold may be greater than 10 cm, for example, the first threshold may be 20 cm.

In the embodiment of the present disclosure, the automatic opening of the first charging port is triggered only when the EV charging plug is within a preset distance from the first charging port, so that the cover of the first charging port can be automatically opened in time, which can effectively protect the charging port, the exposure time of the charging port can be shortened when not in use, and a false triggering can be avoided when multiple vehicles are parked together.

Optionally, the two charging ports may be integrated at the same position of the vehicle, or separately arranged at different positions of the vehicle, which may be specifically determined according to actual conditions, and which is not limited in the embodiment of the present disclosure.

Optionally, the two charging ports are separately arranged at different positions of the vehicle, a distance between the two charging ports is a target value, and the first threshold value is smaller than half of the target value.

It can be understood that when the first threshold is set to be greater than or equal to half of the target threshold, both of the two charging ports may be opened by mistake when the EV charging plug is located at a certain orientation of the vehicle.

In an embodiment of the present disclosure, when the two charging ports are separately set at different positions of the vehicle, the first threshold value is set to be smaller than half of the target value, which can prevent both of the two charging ports from being opened by mistake when the EV charging plug is located at a certain orientation of the vehicle.

Optionally, in order to better prompt the user whether the charging port currently approaching is a charging port that matches the type of the EV charging plug, it can be set that the vehicle outputs prompting information or the vehicle outputs prompting information through the EV charging plug when a distance of the EV charging plug from one charging port is a certain distance.

The prompting information may be voice type prompting information, prompting information in the form of an indicator light, prompting information of a ring type, or prompting information in other forms, which is not limited in the embodiment of the present disclosure.

Exemplarily, a red indicator light and a green indicator light can be set near the charging ports on the vehicle or on a rear window glass of the vehicle. When the EV charging plug is approaching to a charging port that matches the type of the EV charging plug, the green indicator light is lighted, and when the EV charging plug is approaching to a charging port that does not match the type of the EV charging plug, the red indicator light is lighted.

Exemplarily, a red indicator light and a green indicator light can be set on the EV charging plug. When the EV charging plug is approaching to a charging port that matches the type of the EV charging plug, the green indicator light is lighted, and when the EV charging plug is approaching to a charging port that does not match the type of the EV charging plug, the red indicator light is lighted.

Exemplarily, assuming that the prompting information is output through the EV charging plug, the charging control method provided in the embodiment of the present disclosure may further includes the following step 204 prior to the above step 203a.

At step 204, the vehicle transmits a first indication message to the EV charging plug when the distance between the EV charging plug and the first charging port is smaller than or equal to a second threshold.

The second threshold is greater than or equal to the first threshold and smaller than half of the target value, the first indication message is used for indicating the EV charging plug to output first prompting information, and the first prompting information is used for prompting a user that a type of a charging port currently approaching matches the type of the EV charging plug.

The second threshold can be set according to actual use requirements, which is not limited in the embodiment of the present disclosure. For the description of the first prompting information, reference may be made to the related description of the prompting information mentioned above, which is not limited in the embodiment of the present disclosure.

Accordingly, the EV charging plug receives the first indication message transmitted by the vehicle. The EV charging plug outputs the first prompting information.

Exemplarily, assuming that a red indicator light and a green indicator light are installed on the EV charging plug, the first prompting information is that the green light is lighted.

Optionally, if the second threshold is greater than the first threshold, when the distance between the EV charging plug and the first charging port is greater than the first threshold and smaller than or equal to the second threshold, the vehicle outputs the first prompting information through the EV charging plug; and when the distance between the EV charging plug and the first charging port is smaller than or equal to the first threshold, the vehicle opens the first charging port.

In the embodiment of the present disclosure, the first prompting information being output through the EV charging plug can not only effectively prompt the user that the charging port currently approaching is a charging port that matches the type of the EV charging plug, but also can effectively protect the charging port and shorten exposure time of the charging port when not in use.

Exemplarily, assuming that the prompting information is output through the EV charging plug, the charging control method provided in the embodiment of the present disclosure may further include the following step 205 prior to the above step 203a.

At step 205, the vehicle transmits a second indication message to the EV charging plug when the distance between the EV charging plug and the second charging port is smaller than or equal to a third threshold.

A second charging port is another charging port of the two charging ports different from the first charging port, the third threshold is smaller than half of the target value, the second indication message is used for indicating the EV charging plug to output second prompting information, and the second prompting information is used for prompting a user that a type of a charging port currently approaching does not match the type of the EV charging plug.

The third threshold may be set according to actual use requirements, which is not limited in the embodiment of the present disclosure. The third threshold may be the same as the second threshold or different from the second threshold, which is not limited in the embodiment of the present disclosure. For the description of the second prompting information, reference may be made to the related description of the prompting information mentioned above, which is not limited in the embodiment of the present disclosure.

Accordingly, the EV charging plug receives the second indication message transmitted by the vehicle. The EV charging plug outputs the second prompting information.

Exemplarily, assuming that a red indicator light and a green indicator light are set on the EV charging plug, the second prompting information is that the red light is lighted.

In the embodiment of the present disclosure, the second prompting information being output through the EV charging plug allows to prompt the user in time that a charging port currently approaching is a charging port that does not match the type of the EV charging plug, and then the user can re-approach a charging port that match the type of the EV charging plug according to the prompting information.

Exemplarily, a red indicator light and a green indicator light are provided on the EV charging plug. The fast charging port of the vehicle is provided on the left side of the vehicle, and the slow charging port is provided on the right side of the vehicle. Assuming that the EV charging plug is a fast EV charging plug, when the user is holding the EV charging plug and approaching a right side of a central axis of the vehicle (the distance between the EV charging plug and the slow charging port is smaller than or equal to the third threshold), the red indicator light on the EV charging plug will be lighted at this time, and red indicating an error, because the EV charging plug is a fast EV charging plug but the slow charging port of the vehicle is provided on the right side. At this time, by watching the color of the indicator light of the EV charging plug in the hand, the user can know that the port on the right side is not a suitable charging port, and then move to the left side of the vehicle (the distance between the EV charging plug and the slow charging port is smaller than or equal to the second threshold), and at this time, the green indicator light on the EV charging plug is lighted, because the EV charging plug is a fast EV charging plug and the fast charging port is provided on the left side of the vehicle. The user is holding the EV charging plug and further approaching the charging port on the left side of the vehicle, and when the distance between the EV charging plug and the charging port is smaller than or equal to the first threshold (assumed to be 100cm), the vehicle detects that the EV charging plug has entered an openable range of the charging port, and the vehicle automatically opens the cover of the fast charging port by unlocking an electronic lock or in other manners. Assuming that the user does not see the indicator light of the EV charging plug and continues to hold the fast EV charging plug and approach the slow charging port on the left side of the vehicle, the vehicle will not open the cover of the slow charging port at this time, because the vehicle detects that the EV charging plug is a fast EV charging plug, and the EV charging plug does not match the charging port in type, even though the EV charging plug has entered the openable range within 100cm of the charging port.

Optionally, in an embodiment of the present disclosure, the vehicle can determine an EV charging plug for charging the vehicle from a plurality of available EV charging plugs. Alternatively, the vehicle displays information of each EV charging plug on a display screen of the vehicle, and then determines an EV charging plug for charging the vehicle according to selection of the user.

In an embodiment of the present disclosure, information related to EV charging plugs can be displayed on the display screen of the vehicle, so that the user can determine an EV charging plug for charging the vehicle, find the EV charging plug, and find a charging port on the vehicle that matches the type of the EV charging plug, according to the information related to the EV charging plugs.

Exemplarily, the charging control method provided in the embodiment of the present disclosure may further include the following step 206 prior to the above step 203.

At step 206, the vehicle displays target information on a display screen of the vehicle.

The target information includes at least one of: position information of the first charging port on the vehicle; identity information of the EV charging plug; the type information of the EV charging plug; charging parameter information of the EV charging plug; fault information of the EV charging plug; path information between the vehicle and the EV charging plug; and displacement information of the EV charging plug relative to the vehicle.

For the description of the identity information, the type information, the charging parameter information, and the fault information, reference is made to the relevant description in the above step 201, which will not be elaborated herein. The user can determine an EV charging plug for charging the vehicle based on the identity information, the type information, the charging parameter information, and the fault information.

The position information of the first charging port on the vehicle is used for indicating a position of the first charging port on the vehicle. Thereby, the user can find the first charging port more quickly, and the user experience can be improved.

The path information between the vehicle and the EV charging plug is used for indicating a path between the vehicle and the EV charging plug. Thereby, it is convenient for the user to quickly find the EV charging plug based on the path information, and the user experience can be improved.

The displacement information of the EV charging plug relative to the vehicle is used for indicating a movement trajectory of the EV charging plug relative to the vehicle. Thereby, it is convenient for the user to quickly find the EV charging plug based on the displacement information, and the user experience can be improved.

Optionally, the charging control method provided in the embodiment of the present disclosure may further include the following step 207 prior to the above step 203a.

At step 207, the vehicle obtains the distance between the EV charging plug and the first charging port.

In an embodiment of the present disclosure, the vehicle communicates with the target UWB antenna module on the EV charging plug through at least one UWB antenna module to obtain the distance between the EV charging plug and the first charging port. For the specific process, reference may be made to the following description of obtaining the distance between the EV charging plug and the first charging port by the vehicle in the embodiment of the present disclosure, which will not be elaborated herein.

Accordingly, the target UWB antenna module is further used for the vehicle to position the EV charging plug, determine the distance between the EV charging plug and the first charging port, and open the cover of the first charging port when the distance between the EV charging plug and the first charging port is smaller than or equal to the first threshold.

Optionally, if at least one low-frequency antenna module is provided on the vehicle, and a low-frequency antenna module is also provided on the EV charging plug, the vehicle can also communicate with the low-frequency antenna module on the EV charging plug through at least one low-frequency antenna module to obtain the distance between the EV charging plug and the first charging port. For the specific process, reference may be made to the following description of obtaining the distance between the EV charging plug and the first charging port by the vehicle in the embodiment of the present disclosure, which will not be elaborated herein.

Optionally, if a Bluetooth module is provided on the vehicle and a Bluetooth module is also provided on the EV charging plug, the Bluetooth modules can be used for positioning the vehicle and the EV charging plug to obtain the distance between the EV charging plug and the first charging port. For the specific process, reference can be made to the existing Bluetooth positioning technology, which will not be elaborated herein.

Optionally, in an embodiment of the present disclosure, the vehicle can alternatively combine a UWB antenna module, a low-frequency antenna module, and a Bluetooth module provided on the vehicle to cooperatively obtain the distance between the EV charging plug and the first charging port.

Optionally, at least one UWB antenna module includes a first UWB antenna module disposed at the first charging port, and the target UWB antenna module is disposed on the EV charging plug; and the foregoing step 207 can be specifically implemented by the following step 207a.

At step 207a, the vehicle communicates with the target UWB antenna module through the first UWB antenna module to determine the distance between the EV charging plug and the first charging port.

It can be understood that if the two charging ports are separately arranged at different positions of the vehicle, a UWB antenna module is respectively provided at each of the two charging ports. If the two charging ports are integrated at a same position of the vehicle, a UWB antenna module can be installed at the position of the two charging ports.

Reference can be made to the related art for the method for obtaining the distance between the EV charging plug and the first charging port based on communication of the UWB antenna modules, which is not limited in the embodiment of the present disclosure. For example, the distance can be measured by the time difference of arrival (TDoA) technique, or the time of flight (ToF) technique.

Optionally, the foregoing step 207a may be specifically implemented through the following steps 207a1 to 207a2.

At step 207a1, the vehicle obtains a first communication parameter between a first UWB antenna module and the target UWB antenna module based on the first UWB antenna module.

At step 207a2, the vehicle calculates the distance between the EV charging plug and the first charging port based on the first communication parameter.

Optionally, the first communication parameter can be a time difference of arrival, and the vehicle can calculate the distance between the EV charging plug and the first charging port based on the time difference of arrival.

Optionally, the first communication parameter can be a time of flight, and the vehicle can calculate the distance between the EV charging plug and the first charging port based on the time of flight.

For details, reference may be made to existing related art, which is not limited in the embodiment of the present disclosure.

Exemplarily, the first UWB antenna module is provided at the first charging port of the vehicle, and the target UWB antenna module is provided on the EV charging plug. The vehicle transmits a distance measurement request signal to the target UWB antenna module of the EV charging plug through the first UWB antenna module, the EV charging plug transmits a reply signal to the first UWB antenna module of the vehicle through the target UWB antenna module, the vehicle first calculates time of signal flight of the first UWB antenna module for transmitting the distance measurement request signal and receiving the reply signal of the EV charging plug, and then calculates the distance between the first UWB antenna module and the EV charging plug based on the time of signal flight.

In the embodiment of the present disclosure, when a UWB antenna module is respectively provided at each charging port, the distance between the EV charging plug and the charging port can be quickly determined.

Optionally, the foregoing step 207 may be specifically implemented through the following steps 207b to 207c.

At step 207b, the vehicle positions the EV charging plug based on at least one UWB antenna module to obtain a first distance and a first orientation of the EV charging plug relative to the vehicle.

At step 207c, the vehicle determines the distance between the EV charging plug and the first charging port based on the first distance, the first orientation and a position of the first charging port on the vehicle.

It can be understood that the vehicle can directly position the EV charging plug based on at least one UWB antenna module to obtain the first distance and the first orientation; or indirectly position the EV charging plug through the charging pile and the charging station based on at least one UWB antenna module to obtain the first distance and the first orientation; or position the EV charging plug in other ways, which is not limited in the embodiment of the present disclosure.

In the embodiment of the present disclosure, when no UWB antenna module is provided at each charging port, the distance between the EV charging plug and the charging port can be determined by positioning the EV charging plug and combining the position of the charging port on the vehicle.

Optionally, at least one UWB antenna module is at least three UWB antenna modules that are not on a straight line, and the target UWB antenna module is provided on the EV charging plug. Specifically at the foregoing step 207b, the vehicle may position the EV charging plug through communication between the at least three UWB antenna modules and the target The UWB antenna module to obtain the first distance and the first orientation.

Exemplarily, the foregoing step 207b may be specifically implemented through the following steps 207b 1 to 207b3.

At step 207b 1, the vehicle obtains a target communication parameter between each UWB antenna module of the at least three UWB antenna modules and the target UWB antenna module based on the corresponding UWB antenna module.

At step 207b2, the vehicle calculates a target distance between each UWB antenna module and the target UWB antenna module based on the target communication parameter.

For the description of the target communication parameter, reference may be made to the related description of the first communication parameter mentioned above, which will not be elaborated herein. For the description of calculating the target distance of the vehicle by the vehicle based on the target communication parameter, reference can be made to the description of calculating the distance between the EV charging plug and the first charging port by the vehicle based on the first communication parameter in the foregoing step 207a2, which will not be elaborated herein.

At step 207b3, the vehicle calculates the first distance and the first orientation based on at least three target distances.

It can be understood that the locations of the at least three UWB antenna modules in the vehicle are known. The first distance and the first orientation can be obtained through calculation based on the distance between each UWB antenna module of the at least three UWB antenna modules and the target UWB antenna module, realizing the positioning of the EV charging plug.

It can be understood that the at least three UWB antenna modules are three UWB antenna modules or more UWB antenna modules, and the more UWB antenna modules provided in the vehicle, the more accurate the positioning of the EV charging plug will be.

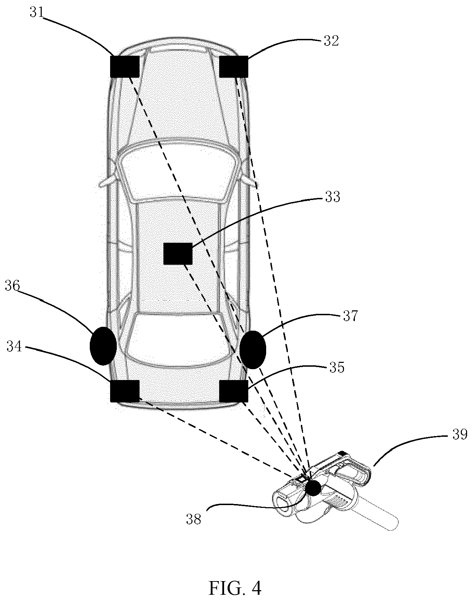

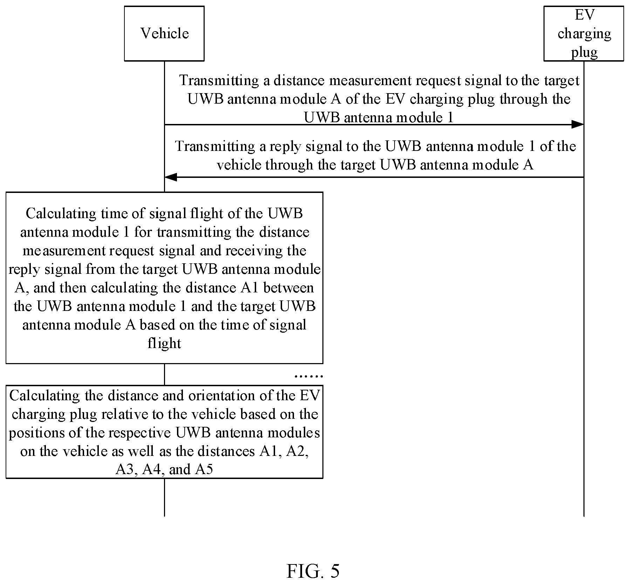

Exemplarily, as shown in FIG. 4, the reference numerals "31" to "35" in FIG. 4 indicate five UWB antenna modules installed on the vehicle, which are respectively denoted as UWB antenna module 1, UWB antenna module 2, UWB antenna module 3, UWB antenna module 4 and UWB antenna module 5; the reference numeral "36" indicates the fast charging port, which is located on the left side of the vehicle; the reference numeral "37" indicates the slow charging port, which is located on the right side of the vehicle; and the reference numeral "38" indicates the target UWB antenna module installed on the EV charging plug, which is denoted as UWB antenna module A. When the vehicle needs to be charged, the UWB antenna modules on the vehicle scan available EV charging plugs within a radius of 200m, and position an EV charging plug that is determined to charge the vehicle to obtain the distance and orientation of the EV charging plug relative to the vehicle. The principle for the vehicle to calculate the distance and orientation of the EV charging plug relative to the vehicle through the at least 3 UWB antenna modules is described as follows. As shown in FIG. 4 above, 5 UWB antenna modules are installed on the vehicle, of which at least three UWB antenna modules are not on the same straight line. As shown in FIG. 5 (FIG. 5 only shows the process of obtaining a distance A1 by the vehicle, and reference can be made to the process of obtaining A1 above for other processes of obtaining distances A2, A3, A4, and A5). First, the vehicle transmits a distance measurement request signal to the EV charging plug through the UWB antenna module 1, and the EV charging plug transmits a reply signal to the UWB antenna module 1 of the vehicle through the UWB antenna module A. The vehicle first calculates time of signal flight of the UWB antenna module 1 for transmitting the distance measurement request signal and receiving the reply signal from the UWB antenna module A, and then calculates the distance A1 between the UWB antenna module 1 and the UWB antenna module A based on the time of signal flight (in the embodiment of the present disclosure, for the UWB antenna module 1, the distance A1 can also be calculated according to the search request message and reply message in FIG. 3). Subsequently, the vehicle transmits a distance measurement request signal to the UWB antenna module A of the EV charging plug through the UWB antenna module 2, and the EV charging plug transmits a reply signal to the UWB antenna module 2 of the vehicle through the UWB antenna module A. The vehicle first calculates time of signal flight of the UWB antenna module 2 for transmitting the distance measurement request signal and receiving the reply signal from the UWB antenna module A, and then calculates the distance A2 between UWB antenna module 2 and UWB antenna module A based on the time of signal flight. By analogy, the distance A3 between the UWB antenna module 3 and the UWB antenna, the distance A4 between the UWB antenna module 4 and the UWB antenna module A, the distance A5 between the UWB antenna module 5 and the UWB antenna module A can be calculated. Since the installation position of each UWB antenna module on the vehicle is known, the vehicle calculates the distance and orientation (first distance and first orientation ) of the EV charging plug relative to the vehicle based on the positions of the respective UWB antenna modules on the vehicle as well as the distances A1, A2, A3, A4, and A5. For example, upon calculation, the EV charging plug is located at 45° to the right rear of the vehicle, 30 cm from the rear of the vehicle and 100 cm from the ground.

Exemplarily, in an embodiment of the present disclosure, the target UWB antenna module is provided on the EV charging plug, a positioning trigger button can also be provided on the EV charging plug, and a positioning mode can be activated by pressing the button. The vehicle can position the EV charging plug only after the button is pressed, which can reduce the operating frequency of the UWB antenna modules on the vehicle (which performs only receiving but no transmitting before the positioning of the EV charging plug starts), and save electric energy. In this case, after the button of the EV charging plug is pressed, the target UWB antenna module on the EV charging plug actively transmits a request for starting distance measurement, and the at least three UWB antenna modules start to communicate with the target UWB antenna module to position the EV charging plug only after the UWB antenna module on the vehicle near the EV charging plug receives the request, for the specific process of which, reference is made to the above example.

Optionally, the vehicle can also indirectly position the EV charging plug through the charging pile or the charging station or others. Especially when the UWB antenna modules on the vehicle are not installed at the charging ports, and the UWB antennas on the vehicle are located on a straight line, the vehicle can indirectly position the EV charging plug through the charging pile or the charging station or others.

Exemplarily, the EV charging plug belongs to a charging device, the charging device is a charging pile or a charging station, and the charging device includes at least three second UWB antenna modules that are not on the same straight line. Specifically at foregoing step 207b, the vehicle positions the EV charging plug through the charging device to obtain the first distance and the first orientation.

Exemplarily, the foregoing step 207b may be implemented through the following steps 207b4 to 207b6.

At step 207b4, the vehicle positions the charging device based on at least one UWB antenna module and the at least three second UWB antenna modules to obtain a second distance and a second orientation of the vehicle relative to the charging device.

It can be understood that the at least three second UWB modules are used for the vehicle to position the charging device to obtain the second distance and second orientation of the vehicle relative to the charging device.

It can be understood that the vehicle communicates with each second UWB antenna module based on one of at least one UWB antenna module, obtains a second communication parameter between the one UWB antenna module and each second UWB antenna module, calculates a fourth distance between the one UWB antenna module and each second UWB antenna module based on the respective second communication parameter, and calculates the second distance and the second orientation based on at least three fourth distances. For the description of step 207b4, reference may be made to the related descriptions of steps 207b 1 to 207b3 mentioned above, which will not be elaborated herein.

At step 207b5, the vehicle receives, from the charging device, a third distance and a third orientation of the EV charging plug relative to the charging device.

The third distance and the third orientation are obtained by the charging device positioning the EV charging plug based on the at least three second UWB antenna modules and the target UWB antenna module.

Accordingly, the charging device positions the EV charging plug based on the at least three second UWB antenna modules to obtain the third distance and third orientation of the EV charging plug relative to the charging device, and transmits the third distance and the third orientation to the vehicle.

It can be understood that the charging device obtains a third communication parameter between each second UWB antenna module of the at least three second UWB antenna modules and the target UWB antenna module based on the corresponding second UWB antenna module. The charging device calculates a fifth distance between each second UWB antenna module and the target UWB antenna module based on the respective third communication parameter. The charging device calculates the third distance and the third orientation based on at least three fifth distances. For the description of step 207b5, reference may be made to the related description of steps 207b 1 to 207b3 mentioned above, which will not be elaborated herein.

At step 207b6, the vehicle obtains the first distance and the first orientation through calculation based on the second distance, the second orientation, the third distance and the third orientation.

It can be understood that the first distance and first orientation of the EV charging plug relative to the vehicle are obtained based on the second distance, the second orientation, the third distance and the third orientation. The first distance and the first orientation are used by the vehicle to determine the distance between the EV charging plug and the first charging port that matches the type of the EV charging plug based on the first distance, the first orientation and a position of the first charging port on the vehicle; and open the cover of the first charging port when the distance between the EV charging plug and the first charging port is smaller than or equal to the first threshold.

It can be understood that if one UWB antenna module or a plurality of UWB antenna modules on the same straight line are provided on the vehicle, at least three second UWB antenna modules that are not on the same straight line are provided on the charging device (each second UWB antenna module is located at a fixed position on the charging device), and each EV charging plug has one target UWB antenna module provided thereon. The specific positioning process is descried as follows. When the positioning trigger button on the EV charging plug is pressed, the multiple UWB antenna modules on the charging device take turns to position the UWB antenna module(s) of the vehicle, and the distance and orientation (second distance and second orientation) of the vehicle relative to the charging device are obtained after calculation. Then the multiple UWB antenna modules on the charging device take turns to position the target UWB antenna module on the EV charging plug; and the distance and orientation (third distance and third orientation) of the EV charging plug relative to the charging device are obtained after calculation. The distance and orientation of the EV charging plug relative to the vehicle can be calculated based on the distance and orientation of the vehicle relative to the charging device in combination with the distance and orientation of the EV charging plug relative to the charging device.

In the embodiment of the present disclosure, the second distance and the second orientation may also be calculated by the charging device and then transmitted to the vehicle. In the embodiment of the present disclosure, the charging device may also calculate the distance and orientation of the EV charging plug relative to the vehicle based on the distance and orientation of the vehicle relative to the charging device in combination with the distance and orientation of the EV charging plug relative to the charging device, and then transmit to the vehicle the distance and orientation of the EV charging plug relative to the vehicle.

In the embodiments of the present disclosure, methods of directly positioning the EV charging plug and indirectly positioning the EV charging plug are provided, so that a solution for positioning the EV charging plug can be determined according to the actual situation, and the automatic opening of the charging port can be better realized.

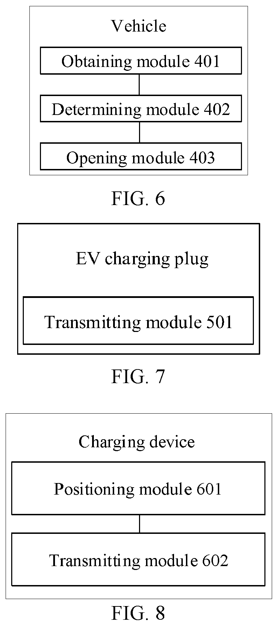

FIG. 6 is a structural block diagram of a vehicle shown in an embodiment of the present disclosure. As shown in FIG. 6, the vehicle includes at least one UWB antenna module and two charging ports of different types. The vehicle includes: an obtaining module 401 and a determining module 402, and an opening module 403. The obtaining module 401 is configured to obtain, based on at least one UWB antenna module, type information of an EV charging plug for charging the vehicle, and the type information is used for indicating a type of the EV charging plug. The determining module 402 is configured to determine, based on the type of the EV charging plug obtained by the obtaining module 401, a first charging port that matches the type of the EV charging plug from the two charging ports. The opening module 403 is configured to open a cover of the first charging port determined by the determining module 402.

Optionally, the opening module 403 is specifically configured to open the cover of the first charging port when a distance between the EV charging plug and the first charging port is smaller than or equal to a first threshold.

Optionally, the two charging ports are separately arranged at different positions of the vehicle, a distance between the two charging ports is a target value, and the first threshold value is smaller than half of the target value.

Optionally, the vehicle further includes a transmitting module configured to transmit a first indication message to the EV charging plug when the distance between the EV charging plug and the first charging port is smaller than or equal to a second threshold, before the opening module 403 opens the cover of the first charging port when the distance between the EV charging plug and the first charging port is smaller than or equal to the first threshold. The second threshold is greater than or equal to the first threshold and smaller than half of the target value, the first indication message is used for indicating the EV charging plug to output first prompting information, and the first prompting information is used for prompting the user that a type of a charging port currently approaching matches the type of the EV charging plug.

Optionally, the transmitting module is further configured to transmit a second indication message to the EV charging plug when the distance between the EV charging plug and a second charging port is smaller than or equal to a third threshold, before the opening module 403 opens the cover of the first charging port when the distance between the EV charging plug and the first charging port is smaller than or equal to the first threshold. The second charging port is another charging port of the two charging ports different from the first charging port. The third threshold is smaller than half of the target value, the second indication message is used for indicating the EV charging plug to output second prompting information, and the second prompting information is used for prompting the user that a type of a charging port currently approaching does not match the type of the EV charging plug.

Optionally, the vehicle further includes a display module configured to display target information on a display screen of the vehicle before the opening module 403 opens the cover of the first charging port. The target information includes at least one of: position information of the first charging port on the vehicle; identity information of the EV charging plug; the type information of the EV charging plug; charging parameter information of the EV charging plug; fault information of the EV charging plug; path information between the vehicle and the EV charging plug; displacement information of the EV charging plug relative to the vehicle.

Optionally, at least one UWB antenna module includes a first UWB antenna module disposed at the first charging port, and the EV charging plug has a target UWB antenna module disposed thereon. The vehicle further includes: a calculation module. The obtaining module 401 is further configured to obtain a first communication parameter between the first UWB antenna module and the target UWB antenna module based on the first UWB antenna module, before the opening module 403 opens the cover of the first charging port when the distance between the EV charging plug and the first charging port is smaller than or equal to the first threshold. The calculation module is configured to calculate the distance between the EV charging plug and the first charging port based on the first communication parameter obtained by the obtaining module 401.

Optionally, the vehicle further includes: a positioning module configured to position the EV charging plug based on at least one UWB antenna module to obtain the first distance and the first orientation of the EV charging plug relative to the vehicle, before the opening module 403 opens the cover of the first charging port when the distance between the EV charging plug and the first charging port is smaller than or equal to the first threshold. The determining module 402 is further configured to determine the distance between the EV charging plug and the first charging port based on the first distance, the first orientation obtained by the positioning module, and a position of the first charging port on the vehicle.

Optionally, at least one UWB antenna module is at least three UWB antenna modules that are not on a straight line, and the EV charging plug has a target UWB antenna module provided thereon; the positioning module is specifically configured to obtain, based on each of the at least three UWB antenna modules, a target communication parameter between the corresponding UWB antenna module and the target UWB antenna module; calculate a target distance between each of the at least three UWB antenna modules and the target UWB antenna module based on the respective target communication parameter; and calculate the first distance and the first orientation based on at least three target distances.

Optionally, the EV charging plug belongs to a charging device, the charging device is a charging pile or a charging station, and the charging device includes at least three second UWB antenna modules that are not on the same straight line. The positioning module is specifically configured to position the charging device based on at least one UWB antenna module and the at least three second UWB antenna modules to obtain a second distance and a second orientation of the vehicle relative to the charging device; receive a third distance and a third orientation of the EV charging plug relative to the charging device from the charging device, the third distance and the third position being obtained by the charging device by positioning the EV charging plug based on the at least three second UWB antenna modules and the target UWB antenna module; and calculate the first distance and the first orientation based on the second distance, the second orientation, the third distance and the third orientation .

In the embodiment of the present disclosure, the respective modules can implement the charging control method provided in the above method embodiments, and can achieve the same technical effect, details of which will not be elaborated herein in order to avoid repetition.

FIG. 7 is a structural block diagram of an EV charging plug shown in an embodiment of the present disclosure. As shown in FIG. 7, the EV charging plug is provided with a target UWB antenna module. The EV charging plug includes: a transmitting module 501 configured to transmit type information of the EV charging plug to the vehicle based on the target UWB antenna module. The vehicle includes two charging ports of different types. The type information is used for indicating a type of the EV charging plug; the type information is used for the vehicle to determine the EV charging plug for charging the vehicle, determine a first charging port that matches the type of the EV charging plug from the two charging port based on the type of the EV charging plug, and open a cover of the first charging port.

Optionally, the two charging ports are separately arranged at different positions of the vehicle; and the EV charging plug further includes: a receiving module and an output module. The receiving module is configured to receive a first indication message transmitted from the vehicle after the transmitting module 501 transmits the type information of the EV charging plug to the vehicle. The first indication message is used for indicating the EV charging plug to output first prompting information, and the first prompting information is used for prompting the user that a type of a charging port currently approaching matches the type of the EV charging plug. The output module is configured to output the first prompting information.

Optionally, the receiving module is further configured to receive a second indication message transmitted from the vehicle after the transmitting module 501 transmits the type information of the EV charging plug to the vehicle. The second indication message is used for indicating the EV charging plug to output second prompting information. The second prompting information is used for prompting the user that a type of a charging port currently approaching does not match the type of the EV charging plug. The output module is further configured to output the second prompting information.

Optionally, the target UWB antenna module is also used for the vehicle to position the EV charging plug, determine the distance between the EV charging plug and the first charging port, and open a cover of the first charging port when a distance between the EV charging plug and the first charging port is smaller than or equal to a first threshold.

In the embodiment of the present disclosure, the respective modules can implement the charging control method provided in the above method embodiments, and can achieve the same technical effect, details of which will not be elaborated herein in order to avoid repetition.

FIG. 8 is a structural block diagram of a charging device shown in an embodiment of the present disclosure. As shown in FIG. 8, the charging device is a charging pile or a charging station, the charging device includes at least three second UWB antenna modules that are not on a same straight line and an EV charging plug, and the charging device includes: a positioning module 601 and a transmitting module 602. The positioning module 601 is configured to position the EV charging plug based on the at least three second UWB antenna modules to obtain a third distance and third orientation of the EV charging plug relative to the charging device. The transmitting module 602 is configured to transmit the third distance and third orientation obtained by the positioning module 601 to the vehicle. The at least three second UWB modules are also used for the vehicle to position the charging device to obtain a second distance and a second orientation of the vehicle relative to the charging device. The first distance and the first position of the EV charging plug relative to the vehicle are obtained based on the second distance, the second orientation, the third distance and the third orientation. The first distance and the first orientation are used for the vehicle to determine a distance between the EV charging plug and a first charging port on the vehicle that matches the type of the EV charging plug based on the first distance, the first orientation and a position of the first charging port on the vehicle, determine a distance between the EV charging plug and the first charging port, and open a cover of the first charging port when the distance between the EV charging plug and the first charging port is smaller than or equal to a first threshold.

In the embodiment of the present disclosure, respective modules can implement the charging control method provided in the above method embodiments, and can achieve the same technical effect, details of which will not be elaborated herein in order to avoid repetition.

An embodiment of the present disclosure further provides a vehicle, which may include a processor, a memory, and a program or instruction stored on the memory and executable on the processor. The program or instruction, when executed by the processor, can implement the respective processes of the charging control method provided in the foregoing method embodiment, and can achieve the same technical effects, details of which will not be elaborated herein in order to avoid repetition.

An embodiment of the present disclosure further provides an EV charging plug, which may include a processor, a memory, and a program or instruction stored on the memory and executable on the processor. The program or instruction, when executed by the processor, can implement the respective processes of the charging control method provided in the foregoing method embodiment, and can achieve the same technical effects, details of which will not be elaborated herein in order to avoid repetition.

An embodiment of the present disclosure also provides a charging device, which may include a processor, a memory, and a program or instruction stored in the memory and executable on the processor. The program or instruction, when executed by the processor, can implement the respective processes of the charging control method provided in the foregoing method embodiment, and can achieve the same technical effects, details of which will not be elaborated herein in order to avoid repetition.

An embodiment of the present disclosure provides a readable storage medium having a program or instruction stored thereon. The program or instruction, when executed by a processor, can implement the respective processes of the charging control method provided in the foregoing method embodiment, and can achieve the same technical effects, details of which will not be elaborated herein in order to avoid repetition.

An embodiment of the present disclosure also provides a computer program product including computer instructions. The computer program product, when running on a processor, causes the processor to execute the computer instructions to implement the respective processes of the charging control method provided by the foregoing method embodiment, and can achieve the same technical effects, details of which will not be elaborated herein in order to avoid repetition.

An embodiment of the present disclosure further provides a chip including a processor and a communication interface coupled to the processor. The processor is configured to execute a program or instruction to implement the respective processes of the foregoing charging control method embodiment, and achieve the same technical effects, details of which will not be elaborated herein in order to avoid repetition.

It should be understood that the chip mentioned in the embodiment of the present disclosure may also be referred to as a system-level chip, a system chip, a chip system, or a system on chip.

In the embodiments provided in the present disclosure, it should be understood that the disclosed system, device, server, and method may be implemented in other ways. For example, the device embodiments described above are only illustrative. For example, the division of the units is only a logical function division, and there may be other divisions in actual implementation, for example, multiple units or components may be combined or integrated into another system, or some features can be ignored or not implemented. In addition, the displayed or discussed mutual coupling or direct coupling or communication connection may be indirect coupling or communication connection through some interfaces, devices or units, and may be in electrical, mechanical or other forms.

## Claims

1. A charging control method, applied in a vehicle comprising at least one UWB antenna module and two charging ports of different types, the method comprising:
obtaining, based on the at least one UWB antenna module, type information of an EV charging plug for charging the vehicle, wherein the type information is used for indicating a type of the EV charging plug;
determining, based on the type of the EV charging plug, a first charging port matching the type of the EV charging plug from the two charging ports; and
opening a cover of the first charging port.

2. The method according to claim 1, wherein said opening the cover of the first charging port comprises:
opening the cover of the first charging port when a distance between the EV charging plug and the first charging port is smaller than or equal to a first threshold,
wherein a distance between the two charging ports is a target value, and the first threshold value is smaller than half of the target value.

3. The method according to claim 2, further comprises, prior to said opening the cover of the first charging port when the distance between the EV charging plug and the first charging port is smaller than or equal to the first threshold:
transmitting a first indication message to the EV charging plug when the distance between the EV charging plug and the first charging port is smaller than or equal to a second threshold,
wherein the second threshold value is greater than or equal to the first threshold and smaller than half of the target value, the first indication message is used for indicating the EV charging plug to output first prompting information, and the first prompting information is used for prompting a user that a type of a charging port currently approaching matches the type of the EV charging plug.

4. The method according to claim 2, further comprising, prior to opening the cover of the first charging port when the distance between the EV charging plug and the first charging port is smaller than or equal to the first threshold:
transmitting a second indication message to the EV charging plug when a distance between the EV charging plug and a second charging port is smaller than or equal to a third threshold,
wherein the second charging port is another charging port of the two charging ports different from the first charging port, the third threshold is smaller than half of the target value, the second indication message is used for indicating the EV charging plug to output second prompting information, and the second prompting information is used for prompting a user that a type of a charging port currently approaching does not match the type of the EV charging plug.

5. The method according to claim 1, further comprising, prior to opening the cover of the first charging port:
displaying target information on a display screen of the vehicle, wherein the target information comprises at least one of:
position information of the first charging port on the vehicle;
identity information of the EV charging plug;
the type information of the EV charging plug;
charging parameter information of the EV charging plug;
fault information of the EV charging plug;
path information between the vehicle and the EV charging plug; and
displacement information of the EV charging plug relative to the vehicle.

6. The method according to any one of claims 2 to 5, wherein the at least one UWB antenna module comprises a first UWB antenna module arranged at the first charging port, and the EV charging plug has a target UWB antenna module provided thereon,
wherein the method further comprises, prior to opening the cover of the first charging port when the distance between the EV charging plug and the first charging port is smaller than or equal to the first threshold:
obtaining a first communication parameter between the first UWB antenna module and the target UWB antenna module based on the first UWB antenna module; and
calculating the distance between the EV charging plug and the first charging port based on the first communication parameter.

7. The method according to any one of claims 2 to 5, further comprising, prior to opening the cover of the first charging port when the distance between the EV charging plug and the first charging port is smaller than or equal to the first threshold:
positioning the EV charging plug based on the at least one UWB antenna module to obtain a first distance and a first orientation of the EV charging plug relative to the vehicle; and
determining the distance between the EV charging plug and the first charging port based on the first distance, the first orientation, and a position of the first charging port on the vehicle.

8. The method according to claim 7, wherein the at least one UWB antenna module consists of at least three UWB antenna modules that are not on a straight line, and the EV charging plug has a target UWB antenna module provided thereon,
wherein said positioning the EV charging plug based on the at least one UWB antenna module to obtain the first distance and the first orientation of the EV charging plug relative to the vehicle comprises:
obtaining a target communication parameter between each UWB antenna module of the at least three UWB antenna modules and the target UWB antenna module based on the corresponding UWB antenna module;
calculating a target distance between each UWB antenna module and the target UWB antenna module based on the target communication parameter; and
calculating the first distance and the first orientation based on at least three target distances.

9. The method according to claim 7, wherein the EV charging plug is comprised in a charging device, the charging device is a charging pile or a charging station, and the charging device further comprises at least three second UWB antenna modules that are not on a same straight line, and the EV charging plug has a target UWB antenna module provided thereon,
wherein said positioning the EV charging plug based on the at least one UWB antenna module to obtain the first distance and the first orientation of the EV charging plug relative to the vehicle comprises:
positioning the charging device based on the at least one UWB antenna module and the at least three second UWB antenna modules to obtain a second distance and a second orientation of the vehicle relative to the charging device;
receiving, from the charging device, a third distance and a third orientation of the EV charging plug relative to the charging device, where the third distance and the third position are obtained by the charging device positioning the EV charging plug based on the at least three second UWB antenna modules and the target UWB antenna module; and
calculating the first distance and the first position based on the second distance, the second orientation, the third distance and the third orientation.

10. A charging control method, applied in an EV charging plug provided with a target UWB antenna module, the method comprising:
transmitting type information of the EV charging plug to a vehicle based on the target UWB antenna module, wherein the vehicle comprises two charging ports of different types, and the type information is used for indicating a type of the EV charging plug; and the type information is used for the vehicle to determine the EV charging plug for charging the vehicle, determine a first charging port that matches the type of the EV charging plug from the two charging ports based on the type of the EV charging plug, and open a cover of the first charging port.

11. The method according to claim 10, wherein the two charging ports are arranged at different positions of the vehicle, respectively,
wherein the method further comprises, subsequent to said transmitting the type information of the EV charging plug to the vehicle:
receiving a first indication message transmitted from the vehicle, wherein the first indication message is used for indicating the EV charging plug to output first prompting information, and the first prompting information is used for prompting a user that a type of a charging port currently approaching matches the type of EV charging plug; and outputting the first prompting information; and/or,
receiving a second indication message transmitted from the vehicle, wherein the second indication message is used for indicating the EV charging plug to output second prompting information, and the second prompting information is used for prompting the user that a type of a charging port currently approaching does not match the type of EV charging plug; and outputting the second prompting information.

12. The method according to claim 10 or 11, wherein the target UWB antenna module is further used for the vehicle to position the EV charging plug, determine a distance between the EV charging plug and the first charging port, and open the cover of the first charging port when the distance between the EV charging plug and the first charging port is smaller than or equal to a first threshold.

13. A vehicle, comprising a processor, a memory, and a program or instruction stored on the memory and executable on the processor, wherein the program or instruction, when executed by the processor, implements steps of the charging control method according to any one of claims 1 to 9.

14. An EV charging plug, comprising a processor, a memory, and a program or instruction stored on the memory and executable on the processor, wherein the program or instruction, when executed by the processor, implements steps of the charging control method according to any one of claims 10 to 12.

15. A readable storage medium having a program or instruction stored thereon, wherein the program or instruction, when executed by a processor, implements steps of the charging control method according to any one of claims 1 to 12.
